(19) **Europäisches Patentamt / European Patent Office / Office européen des brevets**

(11) **EP 4 787 207 A1**

(12) **EUROPEAN PATENT APPLICATION**

(43) Date of publication:
05.08.2026 Bulletin 2026/32

(21) Application number: 26155822.5

(22) Date of filing: 02.02.2026

(51) International Patent Classification (IPC):
$G06F\ 21/55^{(2013.01)}$ $G06F\ 21/57^{(2013.01)}$
$G06N\ 3/045^{(2023.01)}$ $G06N\ 3/092^{(2023.01)}$
$H04B\ 7/185^{(2006.01)}$ $H04L\ 9/40^{(2022.01)}$

(52) Cooperative Patent Classification (CPC):
H04L 63/1425; G06F 21/552; G06F 21/577;
G06N 3/006; G06N 3/044; G06N 3/0442;
G06N 3/045; G06N 3/047; G06N 3/08; G06N 3/086;
G06N 3/088; G06N 3/092; G06N 3/098;
G06N 3/0985; G06N 5/01; (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 03.02.2025 IL 31878625

(71) Applicant: Deutsche Telekom AG
53113 Bonn (DE)

(72) Inventors:
• BEN-SIMAN, Aviel
8471966 Beer Sheva (IL)

• ELOVICI, Yuval
7986400 Arugot (IL)
• SHABTAI, Asaf
7684200 Hulda (IL)
• HOLSCHKE, Oliver
10969 Berlin (DE)
• PLACHY, Jan
14055 Berlin (DE)

(74) Representative: Schmidt, Christian
ZSP Patentanwälte PartG mbB
Hansastraße 32
80686 München (DE)

(54) **SYSTEM AND METHOD FOR SATELLITE ONBOARD ENERGY EFFICIENT ANOMALY DETECTION USING REINFORCEMENT LEARNING (RL)**

(57) An RL-based framework for energy efficient onboard anomaly detection of a satellite moving in a predetermined orbit, comprising a repository of pre-trained anomaly detection models, trained on a specific subset of samples, or rule-based detectors; onboard sensors for continuously monitoring the satellite systems and data network and the onboard collected data; an RL-based agent for deciding which model to activate each time and what features to monitor via a subset of sensors, according to the location, cyber vulnerability level, previous anomalous activity, functions to be executed and energy state of the battery of the satellite, to achieve in each state the highest performance of each anomaly detection task, while investing the lowest amount of energy possible; means for providing alerts in the event of a detected cyber-attack.

EP 4 787 207 A1

(52) Cooperative Patent Classification (CPC): (Cont.)
**G06N 7/01; G06N 20/10; G06N 20/20;
H04B 7/18519**

**Description**

**Field of the Invention**

The present invention relates to the field of cyber security. More particularly, the present invention relates to an RL-based onboard energy efficient system and method for detecting anomalies in communication satellites, to protect them from cyber threats.

**Background for the Invention**

The integration of satellites, particularly in fast-evolving technologies like the Internet of Things (IoT) and cellular communications utilize satellite constellations to enhance signal coverage and ensure reliable connections, even in isolated locations. Low Earth Orbit (LEO) satellites (that operate close to Earth and orbiting quickly, to provide low latency for fast internet, communication, Earth observation, and navigation), such as CubeSats (CubeSats are a class of nanosatellites that use a standard size and form factor), have gained popularity for commercial use due to their cost-effectiveness. However, CubeSats face substantial challenges, mainly due to their limited energy resources. Operating on solar-powered batteries, these satellites need to efficiently manage the available energy to run their payloads and vital systems and avoid battery depletion, to ensure a continuous operation. This energy constraint is a significant barrier in deploying advanced Deep Learning (DL) models onboard, which require a lot of computational power for processing large weight matrices [1, 2]. Recently CubeSats have become popular among many applications, while increasing their risk of cyber-attacks. Moreover, as CubeSats become increasingly important in various applications of large companies, they have also become attractive targets for hackers around the world [3, 4]. These cyber threats can range from data theft and tampering (unauthorized modification, deletion, or manipulation) to disruptive attacks like Denial-of-Service (DoS - a malicious attempt to make a server, website, or network resource unavailable to users by overloading it with excessive traffic or requests) that may prevent the satellite from regular operation. Thus, it is essential to have effective monitoring systems to continuously monitor anomalies in the satellite and alarm in case an unusual behavior is detected.

Since CubeSats are very limited in computational capabilities, data collected from important sensors is moved to the Ground Station (GS - a terrestrial radio station designed for extra-planetary telecommunication with spacecraft constituting part of the ground segment of the spacecraft system, or reception of radio waves from astronomical radio sources). There, analysis and detection of anomalies in the data can be performed using high-performance computers equipped with advanced GPUs [5]. This practice enables the use of state-of-the-art Deep Learning (DL) models like Auto Encoders (AEs - unsupervised neural networks designed to learn efficient data representations by compressing input into a low-dimensional encoding and then reconstructing the output by decoding to match the input) [6] or transformers (a deep learning neural network architecture designed to process sequential data, such as text or images, by analyzing relationships between data points using self-attention mechanisms) [7] that are impractical to run directly on CubeSats. While this approach allows the usage of advanced models in order to detect anomalous activities even in a very complex data such as satellite's telemetry, it requires frequent transmission of data collected by the sensors onboard, while involving extensive communication bandwidth, and leading to higher costs. Furthermore, while data is transferred to the GS, it is more vulnerable to cyber threats including data theft, manipulation and corruption [8]. Therefore, implementing an onboard light-weight anomaly detection system that is capable of analyzing data in real-time while maintaining low energy consumption, could achieve several benefits: (1) significantly reduce bandwidth and storage needs, thereby reducing costs. (2) Access and analyze all collected data, not just the key features pre-selected by operators to be transmitted to the GS, potentially offering a more comprehensive and efficient monitoring of satellite components health status. (3) Since data will be preprocessed onboard, it will minimize hackers' opportunities to attack, and therefore, improve data security against cyber threats.

As the need to execute complex Deep Learning (DL) models on resource-constrained edge devices (such as mobile phones, smart watches, etc.) grows, methods to reduce these models' complexity and resource demands were developed [9, 10].

Optimization strategies can be broadly categorized into three main groups:

(1) Hardware Optimization: utilizing specialized hardware, such as FPGAs (highly flexible integrated circuits that can be reconfigured after manufacturing to perform custom digital logic functions) and AI Accelerators (specialized hardware components designed specifically to speed up artificial intelligence, neural network training, and machine learning workloads), enhances energy utilization and shortens inference time [11, 12].

(2) Offline Optimization: techniques like quantization (the process of mapping input values from a large, often continuous set to a smaller, finite, or discrete set, effectively reducing data precision), pruning (a model optimization technique that removes unnecessary, redundant, or low-importance parameters from neural networks to enhance efficiency), and compression (model compression reduces the size and computational requirements of large neural networks, enabling them to run efficiently on resource-constrained devices) are applied pre-deployment to decrease the computational and storage requirements during inference [13, 14].

(3) Online Optimization: deploying efficient architectures designs, such as Adaptive Model Selection [15-7] or Selective Execution (techniques that intelligently skip unnecessary computational steps, models, or data processing, executing only the relevant components needed for a given input or task) [18], can improve energy efficiency, reduce inference time, and sometimes even boost model performance. Additionally, Reinforcement Learning (RL - an area of machine learning where a software agent learns to make optimal decisions by interacting with an environment and receiving feedback in the form of rewards or penalties) is increasingly being applied to automate complex tasks that were previously managed manually [19, 20].

In complex systems that are sensitive to anomalies, such as satellites, it is essential to monitor collected data behavior. However, because of energy constraints, an onboard monitoring system would have to maintain low energy consumption while having sufficient performance to provide sufficient security. Various approaches aim to improve energy efficiency in such systems, some of them rely on a specialized hardware for this task. Other solutions utilize optimization techniques, pre-deployment (training phase) or post deployment (inference phase), to preserve energy, while maintaining good performance. Specifically, inference phase optimization may refer to adaptive systems where, based on a given situation, systems can dynamically choose the most rewarding actions for the task.

Training phase optimization

DL models often have many connected layers and millions of parameters, thereby imposing substantial computational demands during the inference phase. Optimization methods were developed to be used on a trained model before deployment. Those methods are usually divided into several categories:

(1) Network parameter pruning
(2) Sparse Representation
(3) Quantization
(4) Knowledge-Distillation (KD) [13].

Recently, Deep Neural Networks (DNNs - artificial neural networks with multiple hidden layers between input and output, designed to model complex, non-linear relationships in data) have become more complex and often consist of billions of parameters in order to achieve better performance. As a result, some of the networks weights will have less impact than others during inference [21]. By keeping only the most significant parts of the network, computational intensity and used memory can be reduced while maintaining comparable performance [22].

Pruning methods aim to locate those "weak" units and exclude them from the network. Though, determining which units are weak can be a challenging task. The basic approach is to experiment with range of constant weight thresholds and remove any weights that are below that threshold after the training phase. However, when networks are very large, this task can be very time consuming and incorrect threshold values might significantly harm the performance.

SeulKi Yeom et al. [23] proposed a new pruning criterion, Layer-wise Relevance Propagation (LRP), that uses explainable AI (XAI - a set of processes and methods that enables human users to understand, trust, and manage the output of machine learning algorithms) in order to locate the dominant units in the network (i.e. weights, filters, etc.). LRP was tested on two popular networks VGG-16 and ResNet-50 and managed to significantly reduce number of parameters from $119.61 * 10^7$ to $37 * 10^7$ and $23.54*10^7$ to $9*10^7$ for ResNet-50 while only losing at most 13.69%, 2.9% accuracy respectively.

While pruning techniques aim to remove the redundant weights, quantization techniques reduce the number of bits representing every weight in the network, potentially allowing resource constrained systems to store the weights in a memory for faster and more efficient operation. While regularly parameters are represented with 32 bits, several technologies were able to use only four bits and achieve state-of-the-art performance and high compression ratio.

Utilizing offline optimization techniques might allow us to be more energy efficient while maintaining high performance, even on a very resource constrained system such as CubeSats.

Given the variety of data types and possible goals, there is no one universal model that can be used as a fit-for-all solution [27]. Even in other domains, dynamic behavior can consider various factors on real-time and perform an action accordingly to maximize performance while minimizing energy consumption and inference time.

While compression techniques can be useful when deploying heavy models on mobile devices, choosing an optimal compression strategy depends on user's performance demands and environmental constraints (mobile hardware). Liu et al. [15] introduced AdaDeep, a RL-based framework that provides on demand deep network compression.

Similarly, Marco et al. [16] proposed a novel model selection framework that based on input-data, builds a sequential ensemble of models. Their goal was to reduce inference time by choosing the most suitable ensemble for the input data.

It has been shown that RL-based frameworks can be used to design an intelligent framework that is capable of acting in accordance with the environment for better energy and computational efficiency while maintaining state-of-the-art performance.

Recently, optimizing energy consumption of resource constrained satellites achieved an increasing attention. Zeleke et al. [20] implemented on an Earth-observing satellite a Convolutional Neural Network (CNN) model (a type of deep learning model specifically designed to process data with a grid-like topology, such as images) that detects and removes cloudy images to ensure an efficient utilization of onboard memory, power and communication bandwidth. Additionally, they proposed an onboard task scheduling mechanism that uses Deep Reinforcement Learning (DRL- RL rehnique that allows AI agents to learn complex decision-making by taking actions in an environment, receiving rewards or penalties, and adjusting strategies to maximize cumulative rewards) to prepare an execution plan of existing tasks to improve efficiency. The CNN classifier was built and trained on the ground with Sentinel-2 satellite labeled (cloudy or not) images dataset; 19.2k colored images of size 256x256. For the scheduler, data was collected with STK simulation for two day scenario; the planning problem was formulated as Markov Decision Process (MDP - a mathematical framework used to model decision-making in situations where outcomes are partly random and partly under the control of a decision-maker, suh as an agent) and solved with Q-Learning algorithm. The compressed CNN model was evaluated on 100 images from each class and achieved 92% accuracy and allowed better stored data utilization. Scheduler was compared to a heuristic scheduler that greedily selects the lowest cost task in every state and could see a difference between the two resulted plans.

However, most of the existing orchestration frameworks are not focused on energy consumption optimization of a cyber security task.

It is therefore an object of the present invention to provide an onboard framework that allows complex anomaly detection algorithms to run and improve the cyber security protection with efficient utilization of onboard energy.

It is another object of the present invention to provide an onboard framework that minimizes the energy consumption of an anomaly detection task, while preserving sufficient performance.

Other objects and advantages of the invention will become apparent as the description proceeds.

## Summary of the Invention

An RL-based framework for energy efficient onboard anomaly detection of a satellite moving in a predetermined orbit, comprising:

a) a repository of pre-trained anomaly detection models (such as autoencoders), being trained on a specific subset of samples, or rule-based detectors;

b) onboard sensors for continuously monitoring the satellite systems and data network and the onboard collected data;

c) an RL-based agent for deciding which model to activate each time and what features to monitor via a subset of sensors, according to the location, cyber vulnerability level, previous anomalous activity, functions to be executed and energy state of the battery of the satellite, to achieve in each state the highest performance of each anomaly detection task, while investing the lowest amount of energy possible; and

d) means for providing alerts in the event of a detected cyber-attack.

Different context may be associated with different performance requirements.

For a given an orbit Oj, the goal function F(Oj) may be defined as:

$$F(O_j) = \min \frac{EC_j}{P_j} = \min \sum_{k=1}^{m} \frac{e_{j,k}}{p_{j,k}}$$

Battery depletion may be prevented by meeting the following constraint:

$$\forall k : e_{f_i} + (y_{i,k}^L \cdot e_{L_i} + y_{i,k}^H \cdot e_{H_i}) \leq E_t - E_{\text{threshold}}$$

Energy optimization may be performed by formulating the optimization as a Markov Decision Process (MDP) to be solved using RL.

The RL-based agent may skip inference to prevent battery depletion.

An episode may be terminated upon completing the orbit or upon battery depletion.

The RL-based agent may balance the trade-off between performance P and the amount of Energy Consumed (EC) using the reward function, while preventing battery depletion.

A reconstruction loss may be used during training as a metric for performance.

Model selection and deep reinforcement learning may be used to manage the trade-off between energy consumption EC and performance P, while avoiding battery depletion.

The RL-based agent may apply an initial policy which maps actions to states, and iteratively interacts with the environment, to improve and maximize the expected rewards.

The dataset used for training may consist of telemetry, hardware information and satellite operative commands.

The RL-based agent may increase the orbit length to maintain the trade-off between energy consumption and performance.

Whenever the battery's state of charge is lower, lightweight models may be used to prioritize low energy consumption.

## Brief Description of the Drawings

The above and other characteristics and advantages of the invention will be better understood through the following illustrative and non-limitative detailed description of preferred embodiments thereof, with reference to the appended drawings, wherein:

- Fig. 1 is a representation of the problem formulation as Markov Decision Process (MDP), generally describing which components are found in a state, what actions can be taken and parameters that are considered when calculating the rewards;

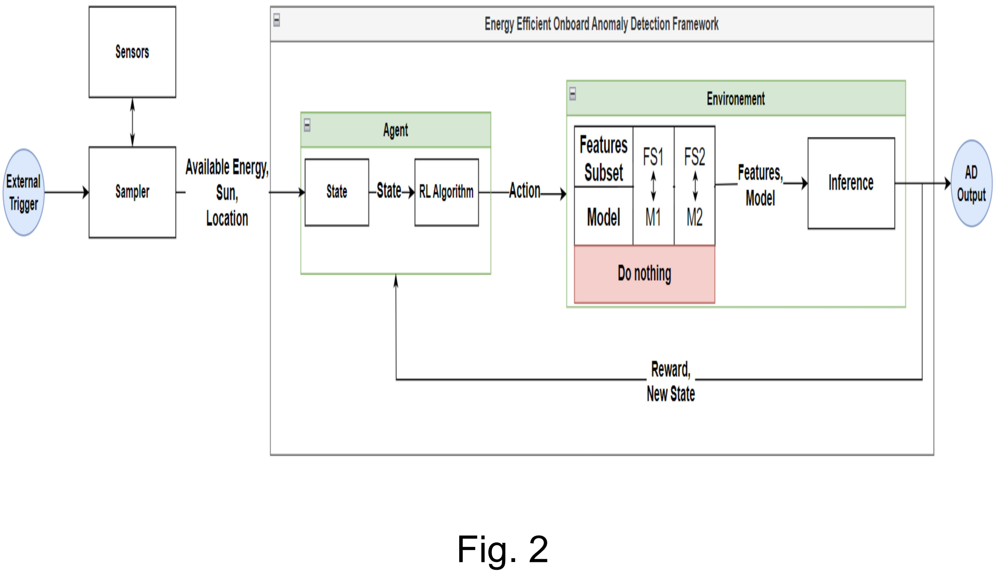

- Fig. 2 illustrates a high-level pipeline of the proposed framework. Once activated, environmental information is delivered in the framework. An RL-based agent then determines what model to activate for anomaly detection and finally observes the rewards;
- Fig. 3a illustrates the RL-based agent's behavior during training monitored by the amount of energy consumed by models chosen;
- Fig. 3b illustrates the reconstruction loss;
- Fig. 3c illustrates the amount of steps the RL-based agent did in one episode;
- Fig. 4 shows a comparison of collected rewards between the trained RL-based agent and a random RL-based agent;
- Fig. 5 shows the distribution of activated models in different battery levels: 85+, 51-84, 31-50, 1-30 by the trained RL-based agent. As the battery is higher, the RL-based agent mostly uses the heavier models. When battery gets lower, lightweight models are preferred. If battery is in critical condition, the RL-based agent may decide to skip inference.

## Detailed Description of the Invention

The present invention provides a novel RL-based framework, for satellite energy efficient onboard anomaly detection. The proposed framework continuously monitors the satellite systems, data network and the onboard collected data, to provide alerts in the event of detected cyber-attacks. This framework optimizes the tradeoff between performance and energy efficiency, while considering several factors such as current satellite geographic location, available battery, sun exposure, and past anomalous activities. A dedicated RL-based agent decides which model to activate and what features to monitor, given a pool of pre-trained models. The RL-based agent runs on a computerized device having at least one processoc and associated memory, decides which model to activate each time and what features to monitor via a subset of sensors, according to the location, cyber vulnerability level, previous anomalous activity, functions to be executed and energy state of the battery of said satellite, to achieve in each state the highest performance of each anomaly detection task, while investing the lowest amount of energy possible.

The proposed onboard framework is implemented on a resource limited CubeSat and implements a DRL-based system for performing cyber security task on resource constrained CubeSat.

Generally, model selection methods dynamically select different models for inference corresponding to the complexity of the input, often aiming to improve performance. The proposed framework extends this approach to the space domain, for enabling smart anomaly detection applications on extremely resource constrained systems, while focusing on energy consumption.

Satellite anomaly detection is usually performed on specific subset of features. The proposed framework is implemented onboard for wider accessibility to available features on the satellite. The main goal is to minimize energy consumption of an anomaly detection task, while preserving sufficient performance.

Since the satellite's payload's energy consumption is unknown, leftover energy for the proposed framework may vary, but can be accurately calculated at any given time. Also, switching to a different model from previous activated model consumes a relatively small amount of energy. Different context may inquire different performance requirements (e.g. when CubeSat is in a hostile environment, better performance may be required on expense of energy efficiency).

During operation, CubeSat's payload (the specialized instruments, sensors, or communication equipment designed to perform a satellite's primary mission) and other systems consume a dynamic portion of available energy, resulting in an unpredictable amount of leftover energy. The goal pf the proposed framework is to utilize the leftover energy for an onboard anomaly detection task.

If F denotes subsets of available features (sensors) onboard { f1, f2, ..., fn} that can be attacked, then for each subset of features $fi$ two DL-based anomaly detectors Li and Hi are trained, such that Li is lightweight and thus consumes less energy, while Hi consumes more energy but is capable of achieving better performance. The input to the proposed framework at time t consists of current available energy, functions to be executed (e.g., taking photos and analyzing them, communication), CubeSat's geographic location, whether the CubeSat is recharging by the sun or not, and previous anomalous activity denoted as $E_t$, $G_t$, $C_t$, $A_t$, respectively. Once the proposed framework is activated, the input will be used to determine which subset of sensors $fi$ to sample and whether to activate anomaly detector Li or Hi.

The orbit Oj can be described as a finite sequence of states $(s_{j,1}, s_{j,2}, ...)$, where the proposed framework has been activated $Oj = (s_{j,1}, s_{j,2}, ..., s_{j,m})$. The desired goal is to achieve in each state $s_{j,i}$ the highest performance $p_{j,i}$, while investing the lowest amount of energy possible $e_{j,i}$. Given an orbit Oj, the goal function will be defined as:

$$F(O_j) = \min \frac{EC_j}{P_j} = \min \sum_{k=1}^{m} \frac{e_{j,k}}{p_{j,k}}$$

where $e_{j,k}$ and $p_{j,k}$ represent the energy consumed and performance achieved by the chosen model (Li or Hi) in each state $s_{j,k}$, respectively.

Additionally, to ensure that battery does not deplete, the following constraint is defined:

$$\forall k : e_{f_i} + (y_{i,k}^L \cdot e_{L_i} + y_{i,k}^H \cdot e_{H_i}) \leq E_t - E_{\text{threshold}}$$

Where

$$y_{i,k}^L, \ y_{i,k}^H$$

are binary variables indicating the use of a lightweight or a heavy model in state $S_k$. $e_{fi}$, $e_{Xi}$ represent the energy consumption for sampling a subset of features $fi$ and executing the X model on it, respectively.

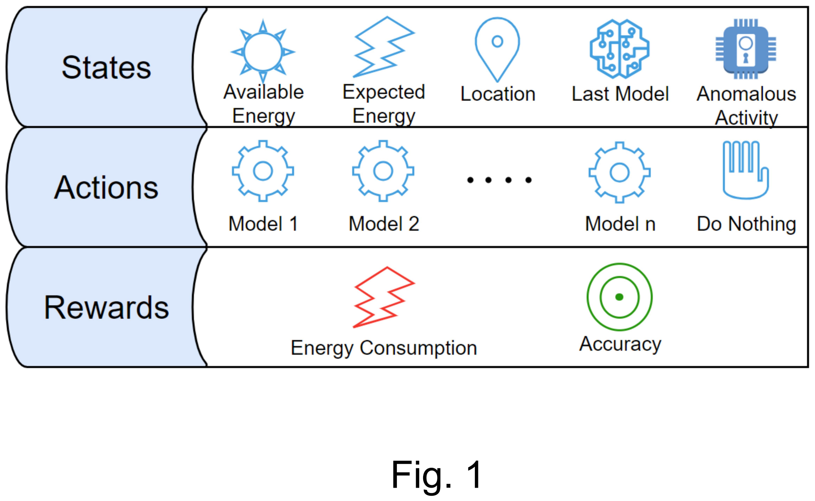

The problem to be solved is formulated into an RL problem with states, actions and rewards, as shown in Fig. 1. Then, a solution to the problem is formulated as an RL-based model selection framework, for performing energy efficient anomaly detection tasks on resource constrained systems (particularly, CubeSat).

As described in Fig. 1, the problem is formulated as a Markov Decision Process (MDP) that can be solved using RL.

An episode is defined as one orbit around Earth. Assuming that an average orbit takes 5,400 seconds and considering the number of samples the proposed framework reads in every activation, it is possible to calculate the maximum number of steps (activations) in one episode as follows:

$$MaxOrbitLength = \frac{AvgOrbitDuration}{W - 1 + BatchSize} = \frac{5400[sec]}{4 - 1 + 32} \approx 155$$

whereas the batch size is 32 windows, and each window $W$ consists of 4 samples.

The state space consists of all possible value combinations for $E_t$, $G_t$, $C_t$ and $A_t$ that affect the RL-based agent's decision, which model to activate.

Every action represents an anomaly detection model that was trained on a specific subset of samples, or rule-based detectors (a deterministic security method using predefined "if-then" logic to identify anomalies, threats, or breaches by comparing data against known patterns). Additionally, the RL-based agent can decide to skip inference to prevent a situation where battery is depleted. Therefore, the number of possible actions corresponds to the total size of available models, incremented by one for the option to skip inference. Formally:

$$|\text{ActionSpace}| = \text{NumModels}+1 = 2 \cdot |F|+1$$

An episode may end in one of the following two ways:

(1) The RL-based agent performed 155 steps, which means that the CubeSat has completed the orbit.
(2) The battery was depleted due to the RL-based agent's actions.

The reward function aims to teach the RL-based agent how to balance the trade-off between performance (P) and the amount of Energy Consumed (EC), while preventing a situation where CubeSat's battery is depleted. EC represents the energy consumed for taking an action, sampling the relevant subset of features (sensors) and performing inference using the chosen model (Li or Hi).
Since the models are autoencoders, the reconstruction loss is used during training as a metric for performance. Specifically, the following reward function R is defined for taking an action *a* in state s:

$$R(a,s) = \begin{cases} -1000 & \text{if } E - EC \leq E_{\text{threshold}} \\ \frac{E-100}{100} \cdot \sqrt{\text{EC}} - \frac{E}{10} \cdot \text{P} & \text{Otherwise} \end{cases}$$

where E is the available energy and P is the performance.
The motivation for shaping the reward function is to encourage the RL-based agent to prioritize performance P when the available energy E is high, and being energy efficient when the battery is closer to zero. The RL-based agent will try to maximize the reward by maintaining the trade-off of the two contradicting terms. The framework uses model selection and deep reinforcement learning to intelligently manage the trade-off between energy consumption EC and performance P, while avoiding battery depletion.
Every activation of the proposed framework at time t and its corresponding state St, is delivered to a DRL-based agent that utilizes an RL algorithm such as a Deep QNetwork (DQN - is an off-policy reinforcement learning algorithm that combines Q-learning (a model-free, value-based reinforcement learning algorithm used to find the optimal action-selection policy for a given finite Markov decision process) with deep neural networks to handle high-dimensional state spaces, such as image data) that begins with an initial policy which maps actions to states, and iteratively interacts with the environment, to improve and maximize the expected rewards. The policy is then used to choose the optimal model and consequently sample the relevant features for inference.
Training a DRL -based agent may require a large dataset of trajectories (orbits) for achieving good performance. Additionally, the trajectories should stimulate a real behavior of CubeSat during its operation while orbiting around Earth. Therefore, a simulation is used to record those orbits. The simulation takes a real currently operating CubeSat and stimulate its environment and behavior with physical components, which then will be used to record various sensors.
The dataset consists of three main categories:

(1) Telemetry - sensory readings collected on the satellite (e.g., the battery's state of charge, the solar panels' current and voltage).
(2) System - hardware information of the Raspberry Pi (a series of small single-board computers) implemented on the CubeSat, which describes the usage of various components (e.g. CPU, disk, I/O counts).
(3) Satellite Operative Commands - commands that are sent from the Ground Station (GS) to the satellite, which are responsible for activating/deactivating subsystems on the satellite (e.g. camera activation, sending files).

The proposed framework is implemented in Python 3.11 Gymnasium, to implement a custom environment. To implement DQN RL-based agents StableBaselines3 has been used, and PyTorch was used for implementing the anomaly detection autoencoder models. Auto encoders use LSTM layers whereas the light and heavy layers' hidden size is Input-4-Output and Input-16-8-4-8-16-output, respectively.
AE models were trained using a dataset with 70k samples. 70% of the samples were used to train the models and the rest for evaluation.
Energy efficiency related physical electricity measurements were made on the CubeSat for, to determine the energy consumption. To assess the performance of anomaly detection, the CubeSat's systems were intentionally attacked during data recording, in order to label it and calculate the accuracy. In addition, the RL-based agent's behavior has been monitored during training with the rewards achieved in every episode. To evaluate the total performance of the proposed framework, the energy consumption and performance that can be achieved were compare to two cases: (1) a heavy model only which is performance-focused and (2) a light model only which is energy-focused.
In order to monitor the RL-based agent's behavior during the training process, the energy consumption was used by activated models in each step, reconstruction loss (a metric in machine learning that quantifies how accurately a model reproduces its input data after compressing and decompressing it) and the number of steps the RL-based agent was able to perform without the battery being depleted.

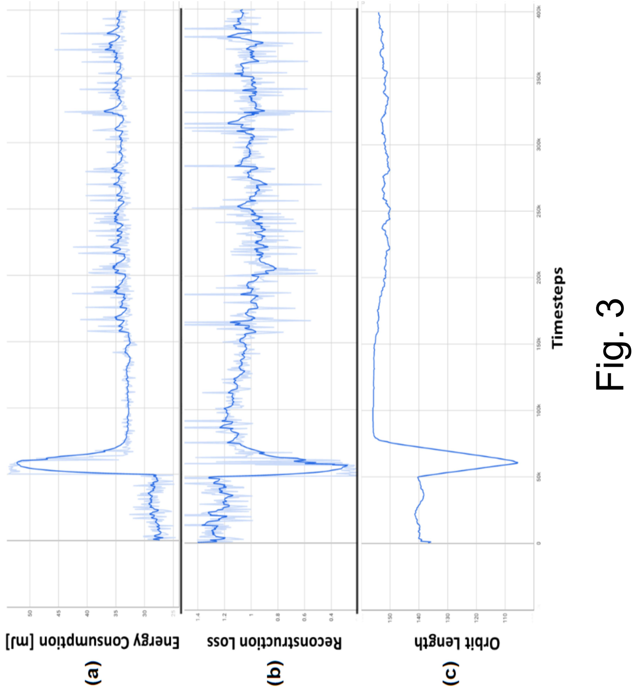

Initially, the RL-based agent tried to activate lightweight models only, resulting in low energy consumption and high reconstruction loss, as seen in Fig. 3. Then, switching to heavy models only resulted in high energy consumption and better performance. In both initial cases, the RL-based agent used all available energy and depleted the energy.

Later, the RL-based agent managed to increase the orbit length and successfully maintain the trade-off between energy consumption and performance. After the RL-based agent was trained, its performance was to a Random RL-based agent that chooses a model randomly. Since the reward function was defined in accordance to the desired RL-based agent behavior, the rewards collected to measure their performance in 100 test trajectories were used.

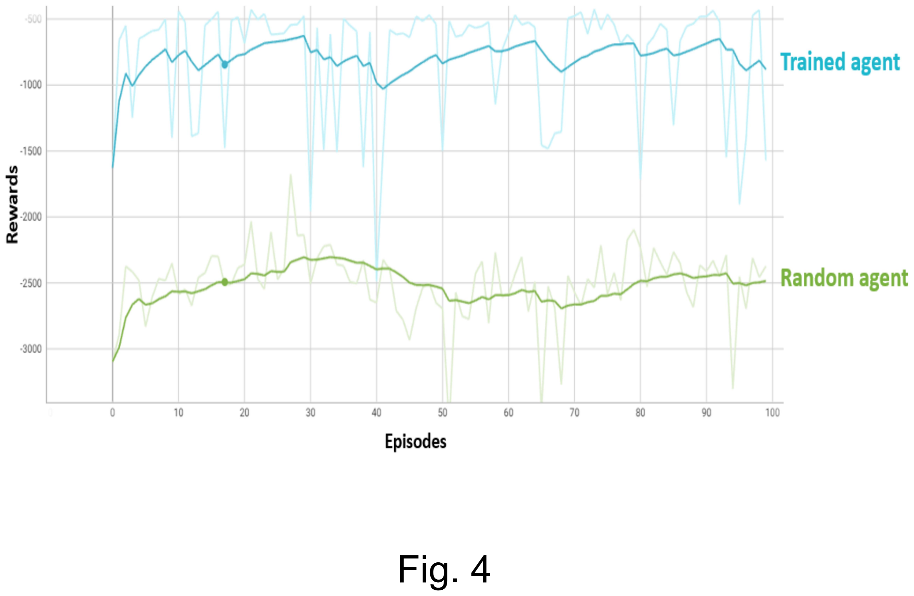

The trained RL-based agent managed to significantly outperform the random RL-based agent in all test episodes, as shown in Fig. 4. This is an indication that the training improved the overall performance of the RL-based agent. The trained RL-based agent significantly outperformed a random RL-based agent, indicating the training process is good. Additionally, the RL-based agent has learned to run the most fit model for the situation, while prioritizing performance when the battery is full and lighter models when it is lower.

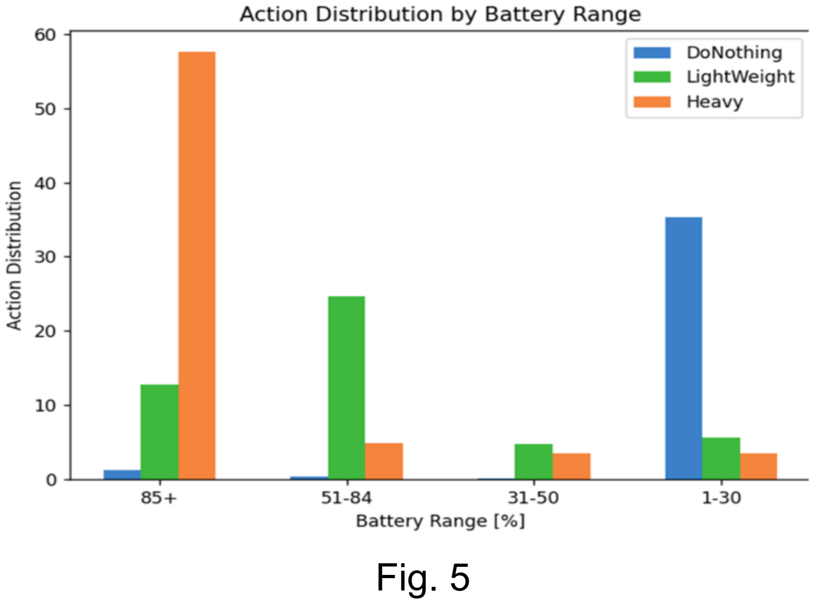

Additionally, a set of new trajectories was used to test the RL-based agent and check the action distribution in different battery conditions: 85+%, 51-84%, 31-50%, 1-30%. As expected, higher battery level will result in higher usage of heavier models to focus performance. When battery's state of charge is lower, lightweight models are used to prioritize low energy consumption. Critical battery condition will result in the RL-based agent skipping inference to reduce the risk of battery depletion, as seen in Fig. 5.

In each activation of the framework, the RL-based agent determined which anomaly detector is necessary for good performance while maintaining low energy consumption and preventing the satellite battery for depleting.

As various embodiments and examples have been described and illustrated, it should be understood that variations will be apparent to one skilled in the art without departing from the principles herein. Accordingly, the invention is not to be limited to the specific embodiments described and illustrated in the drawings.

## REFERENCES

[1] Benoot, Wouter. A hitchhiker's guide to neural network design for onboard deployment in space, In 2023 European Data Handling Data Processing Conference (EDHPC), pages 1-6, 2023. doi: 10.23919/EDHPC59100.2023.10396591.

[2] Furano, Gianluca, Meoni, Gabriele, Dunne, Aubrey, Moloney, David, Ferlet-Cavrois, Veronique, Tavoularis, Antonis, Byrne, Jonathan, Buckley, L'eonie, Psarakis, Mihalis, Voss, Kay-Obbe, and Fanucci, Luca. Towards the use of artificial intelligence on the edge in space systems: Challenges and opportunities. IEEE Aerospace and Electronic Systems Magazine, 35(12):44-56, 2020. doi: 10.1109/MAES.2020.3008468.

[3] Manulis, Mark, Bridges, Christopher P, Harrison, Richard, Sekar, Venkkatesh, and Davis, Andy. Cyber security in new space: analysis of threats, key enabling technologies and challenges. International Journal of Information Security, 20:287-311, 2021.

[4] Falco, Gregory, Viswanathan, Arun, and Santangelo, Andrew. Cubesat security attack tree analysis, In 2021 IEEE 8th International Conference on Space Mission Challenges for Information Technology (SMC-IT), pages 68-76, 2021. doi: 10.1109/SMC-IT51442.2021.00016.

[5] Furano, Gianluca, Tavoularis, Antonis, and Rovatti, Marco. AI in space: applications examples and challenges. In 2020 IEEE International Symposium on Defect and Fault Tolerance in VLSI and Nanotechnology Systems (DFT), pages 1-6, 2020. doi: 10.1109/DFT50435.2020.9250908.

[6] Gao, Honghao, Qiu, Binyang, Barroso, Ram'on J. Dur'an, Hussain, Walayat, Xu, Yueshen, and Wang, Xinheng. Tsmae: A novel anomaly detection approach for internet of things time series data using memory-augmented autoencoder. IEEE Transactions on Network Science and Engineering, 10(5):2978-2990, 2023. doi: 10.1109/TNSE.2022.3163144.

[7] Tuli, Shreshth, Casale, Giuliano, and Jennings, Nicholas R. Tranad: Deep transformer networks for anomaly detection in multivariate time series data, 2022.

[8] Nandakumar, Keerthana, Vinod, Viji, Akbar Batcha, Syed Musthafa, Sharma, Dilip Kumar, Elangovan, Mohanraj, Poonia, Anjana, Mudlappa Basavaraju, Suresh, Dogiwal, Sanwta Ram, Dadheech, Pankaj, and Sengan, Sudhakar. Securing data in transit using data-in-transit defender architecture for cloud communication. Soft Computing, 25(18):12343-12356, 2021.

[9] Wang, Fangxin, Zhang, Miao, Wang, Xiangxiang, Ma, Xiaoqiang, and Liu, Jiangchuan. Deep learning for edge computing applications: A state-of-the-art survey. IEEE Access, 8:58322-58336, 2020. doi: 10.1109/ACCESS.2020.2982411.

[10] Chen, Jiasi and Ran, Xukan. Deep learning with edge computing: A review. Proceedings of the IEEE, 107(8):1655-1674, 2019. doi: 10.1109/JPROC.2019.2921977.

[11] Dutta, Lachit and Bharali, Swapna. Tinyml meets IoT: A comprehensive survey. Internet of Things, 16:100461, 2021.

[12] Han, Song, Liu, Xingyu, Mao, Huizi, Pu, Jing, Pedram, Ardavan, Horowitz, Mark A, and Dally, William J. Eie: Efficient inference engine on compressed deep neural network. ACM SIGARCH Computer Architecture News, 44(3):243-254, 2016.

[13] Mishra, Rahul and Gupta, Hari. Transforming large size to lightweight deep neural networks for IoT applications. ACM Computing Surveys, 55(11):1-35, 2023.

[14] Han, Song, Mao, Huizi, and Dally, William J. Deep compression: Compressing deep neural networks with pruning, trained quantization and huffman coding. arXiv preprint arXiv:1510.00149, 2015.

[15] Liu, Sicong, Lin, Yingyan, Zhou, Zimu, Nan, Kaiming, Liu, Hui, and Du, Junzhao. On-demand deep model compression for mobile devices: A usage-driven model selection framework. In Proceedings of the 16th annual international conference on mobile systems, applications, and services, pages 389-400, 2018.

[16] Marco, Vicent Sanz, Taylor, Ben, Wang, Zheng, and Elkhatib, Yehia. Optimizing deep learning inference on embedded systems through adaptive model selection. ACM Transactions on Embedded Computing Systems (TECS), 19(1):1-28, 2020.

[17] Birman, Yoni, Hindi, Shaked, Katz, Gilad, and Shabtai, Asaf. Cost-effective ensemble models selection using deep reinforcement learning. Information Fusion, 77:133-148, 2022.

[18] Liu, Lanlan and Deng, Jia. Dynamic deep neural networks: Optimizing accuracy-efficiency trade-offs by selective execution. In Proceedings of the AAAI Conference on Artificial Intelligence, volume 32, 2018.

[19] Hou, Huanhuan, Jawaddi, Siti Nuraishah Agos, and Ismail, Azlan. Energy efficient task scheduling based on deep reinforcement learning in cloud environment: A specialized review. Future Generation Computer Systems, 2023.

[20] Zeleke, Desalegn Abebaw and Kim, Hae-Dong. A new strategy of satellite autonomy with machine learning for efficient resource utilization of a standard performance CubeSat. Aerospace, 10(1):78, 2023.

[21] Cheng, Yu, Wang, Duo, Zhou, Pan, and Zhang, Tao. Model compression and acceleration for deep neural networks: The principles, progress, and challenges. IEEE Signal Processing Magazine, 35(1):126-136, 2018. doi: 10.1109/MSP.2017.2765695.

[22] Hoefler, Torsten, Alistarh, Dan, Ben-Nun, Tal, Dryden, Nikoli, and Peste, Alexandra. Sparsity in deep learning: Pruning and growth for efficient inference and training in neural networks. The Journal of Machine Learning Research, 22(1):10882-11005, 2021.

[23] Yeom, Seul-Ki, Seegerer, Philipp, Lapuschkin, Sebastian, Binder, Alexander, Wiedemann, Simon, Müller, Klaus-Robert, and Samek, Wojciech. Pruning by explaining: A novel criterion for deep neural network pruning. Pattern Recognition, 115:107899, 2021.

[24] Jung, Sangil, Son, Changyong, Lee, Seohyung, Son, Jinwoo, Han, Jae-Joon, Kwak, Youngjun, Hwang, Sung Ju, and Choi, Changkyu. Learning to quantize deep networks by optimizing quantization intervals with task loss. In Proceedings of the IEEE/CVF Conference on Computer Vision and Pattern Recognition (CVPR), June 2019.

[25] Russakovsky, Olga, Deng, Jia, Su, Hao, Krause, Jonathan, Satheesh, Sanjeev, Ma, Sean, Huang, Zhiheng, Karpathy, Andrej, Khosla, Aditya, Bernstein, Michael, et al. Imagenet large scale visual recognition challenge. International journal of computer vision, 115:211-252, 2015.

[26] Krizhevsky, Alex, Hinton, Geoffrey, et al. Learning multiple layers of features from tiny images. 2009.

[27] Ding, Jie, Tarokh, Vahid, and Yang, Yuhong. Model selection techniques: An overview. IEEE Signal Processing Magazine, 35(6):16-34, 2018. doi:10.1109/MSP.2018.2867638.

## Claims

1. An RL-based framework for energy efficient onboard anomaly detection of a satellite moving in a predetermined orbit, comprising:

   a) a repository of pre-trained anomaly detection models, being trained on a specific subset of samples, or rule-based detectors;
   b) onboard sensors for continuously monitoring the satellite systems and data network and the onboard collected data;
   c) an RL-based agent, running on a computerized device having at least one processoc and associated memory, for deciding which model to activate each time and what features to monitor via a subset of sensors, according to the location, cyber vulnerability level, previous anomalous activity, functions to be executed and energy state of the battery of said satellite, to achieve in each state the highest performance of each anomaly detection task, while investing the lowest amount of energy possible; and

d) means for providing alerts in the event of a detected cyber-attack.

2. A framework according to claim 1, wherein different context is associated with different performance requirements.

3. A framework according to claim 1, wherein for a given an orbit Oj, the goal function F(Oj) is defined as:

$$F(O_j) = \min \frac{EC_j}{P_j} = \min \sum_{k=1}^{m} \frac{e_{j,k}}{p_{j,k}}$$

4. A framework according to claim 1, wherein battery depletion is prevented by meeting the following constraint:

$$\forall k : e_{f_i} + \left( y_{i,k}^L \cdot e_{L_i} + y_{i,k}^H \cdot e_{H_i} \right) \leq E_t - E_{\text{threshold}}$$

5. A framework according to claim 1, wherein energy optimization is performed by formulating the optimization as a Markov Decision Process (MDP) to be solved using RL.

6. A framework according to claim 1, wherein the RL-based agent skip inference to prevent battery depletion.

7. A framework according to claim 1, wherein an episode is terminated upon completing the orbit or upon battery depletion.

8. A framework according to claim 1, wherein the RL-based agent balances the trade-off between performance P and the amount of Energy Consumed (EC) using the reward function, while preventing battery depletion.

9. A framework according to claim 1, wherein the models are autoencoders.

10. A framework according to claim 1, wherein a reconstruction loss is used during training as a metric for performance.

11. A framework according to claim 1, wherein model selection and deep reinforcement learning are used to manage the trade-off between energy consumption EC and performance P, while avoiding battery depletion.

12. A framework according to claim 1, wherein the RL-based agent applies an initial policy which maps actions to states, and iteratively interacts with the environment, to improve and maximize the expected rewards.

13. A framework according to claim 1, wherein the dataset used for training consists of telemetry, hardware information and satellite operative commands.

14. A framework according to claim 1, wherein the RL-based agent increases the orbit length to maintain the trade-off between energy consumption and performance.

15. A framework according to claim 1, wherein whenever the battery's state of charge is lower, lightweight models are used to prioritize low energy consumption.

EP 4 787 207 A1

| States | Available Energy | Expected Energy | Location | Last Model | Anomalous Activity |
|---|---|---|---|---|---|
| Actions | Model 1 | Model 2 | . . . . | Model n | Do Nothing |
| Rewards | | Energy Consumption | | Accuracy | |

Fig. 1

Fig. 2

Fig. 3

Fig. 4

EP 4 787 207 A1

Fig. 5

| | Europäisches Patentamt European Patent Office Office européen des brevets | **EUROPEAN SEARCH REPORT** | **Application Number** EP 26 15 5822 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TU ZHE ET AL: "An Energy-Efficient Topology Design and DDoS Attacks Mitigation for Green Software-Defined Satellite Network", IEEE ACCESS IEEE, USA, vol. 8, 23 November 2020 (2020-11-23), pages 211434-211450, XP011823226, DOI: 10.1109/ACCESS.2020.3039975 [retrieved on 2020-12-02] * the whole document * ----- | 1-15 | INV. G06F21/55 G06F21/57 G06N3/045 G06N3/092 H04B7/185 H04L9/40 |
| X | CN 119 155 101 B (ELEX CYBERSECURITY INC) 28 January 2025 (2025-01-28) * paragraph [0053] - paragraph [0064] * * paragraph [0103] - paragraph [0117] * * paragraph [0164] - paragraph [0202] * ----- | 1-15 | |
| A | SAURAV STHAPIT ET AL: "Reinforcement Learning for Security-Aware Computation Offloading in Satellite Networks", ARXIV.ORG CORNELL UNIVERSITY LIBRARY, 201 OLIN LIBRARY CORNELL UNIVERSITY ITHACA, NY 14853, 9 November 2021 (2021-11-09), XP091096134, * the whole document * ----- | 1-15 | TECHNICAL FIELDS SEARCHED (IPC) G06F H04B G06E G06N H04L |
| A | ZHANG JIUQI ELISE ET AL: "Time Series Anomaly Detection via Reinforcement Learning-Based Model Selection", 2022 IEEE CANADIAN CONFERENCE ON ELECTRICAL AND COMPUTER ENGINEERING (CCECE) IEEE, 18 September 2022 (2022-09-18), pages 193-199, XP034210801, DOI: 10.1109/CCECE49351.2022.9918216 [retrieved on 2022-10-17] * the whole document * ----- | 1-15 | |

-/--

The present search report has been drawn up for all claims

| Place of search | Date of completion of the search | Examiner |
|---|---|---|
| Munich | 6 May 2026 | Dang, Hoai |

EPO FORM 1503 03.82 (P04C01)

page 1 of 2

| | Europäisches Patentamt European Patent Office Office européen des brevets | **EUROPEAN SEARCH REPORT** | **Application Number** EP 26 15 5822 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 011 511 A (INTEL CORP) 25 April 2023 (2023-04-25) * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 6 May 2026 | Dang, Hoai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 787 207 A1

## ANNEX TO THE EUROPEAN SEARCH REPORT
## ON EUROPEAN PATENT APPLICATION NO.

EP 26 15 5822

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | | Publication date | Patent family member(s) | | Publication date |
|---|---|---|---|---|---|
| CN 119155101 | B | 28-01-2025 | NONE | | |
| CN 116011511 | A | 25-04-2023 | CN | 116011511 A | 25-04-2023 |
| | | | CN | 121279399 A | 06-01-2026 |
| | | | DE | 102022125334 A1 | 20-04-2023 |
| | | | US | 2022036123 A1 | 03-02-2022 |
| | | | US | 20260050655 A1 | 19-02-2026 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENOOT, WOUTER**. A hitchhiker's guide to neural network design for onboard deployment in space. *In 2023 European Data Handling Data Processing Conference (EDHPC)*, 2023, 1-6
- **FURANO, GIANLUCA** ; **MEONI, GABRIELE** ; **DUNNE, AUBREY** ; **MOLONEY, DAVID** ; **FERLET-CAVROIS, VERONIQUE** ; **TAVOULARIS, ANTONIS** ; **BYRNE, JONATHAN** ; **BUCKLEY, L'EONIE** ; **PSARAKIS, MIHALIS** ; **VOSS, KAY-OBBE**. Towards the use of artificial intelligence on the edge in space systems: Challenges and opportunities. *IEEE Aerospace and Electronic Systems Magazine*, 2020, vol. 35 (12), 44-56
- **MANULIS, MARK** ; **BRIDGES, CHRISTOPHER P** ; **HARRISON, RICHARD** ; **SEKAR, VENKKATESH** ; **DAVIS, ANDY**. Cyber security in new space: analysis of threats, key enabling technologies and challenges. *International Journal of Information Security*, 2021, vol. 20, 287-311
- **FALCO, GREGORY** ; **VISWANATHAN, ARUN** ; **SANTANGELO, ANDREW**. Cubesat security attack tree analysis. *In 2021 IEEE 8th International Conference on Space Mission Challenges for Information Technology (SMC-IT)*, 2021, 68-76
- **FURANO, GIANLUCA** ; **TAVOULARIS, ANTONIS** ; **ROVATTI, MARCO**. AI in space: applications examples and challenges. *In 2020 IEEE International Symposium on Defect and Fault Tolerance in VLSI and Nanotechnology Systems (DFT)*, 2020, 1-6
- **GAO, HONGHAO** ; **QIU, BINYANG** ; **BARROSO, RAM'ON J. DUR'AN** ; **HUSSAIN, WALAYAT** ; **XU, YUESHEN** ; **WANG, XINHENG**. Tsmae: A novel anomaly detection approach for internet of things time series data using memory-augmented autoencoder. *IEEE Transactions on Network Science and Engineering*, 2023, vol. 10 (5), 2978-2990
- **TULI, SHRESHTH** ; **CASALE, GIULIANO** ; **JENNINGS, NICHOLAS R**. *Tranad: Deep transformer networks for anomaly detection in multivariate time series data*, 2022
- **NANDAKUMAR, KEERTHANA** ; **VINOD, VIJI** ; **AKBAR BATCHA** ; **SYED MUSTHAFA** ; **SHARMA, DILIP KUMAR** ; **ELANGOVAN, MOHANRAJ** ; **POONIA, ANJANA** ; **MUDLAPPA BASAVARAJU** ; **SURESH, DOGIWAL** ; **SANWTA RAM**. Securing data in transit using data-in-transit defender architecture for cloud communication.. *Soft Computing*, 2021, vol. 25 (18), 12343-12356

- **WANG, FANGXIN** ; **ZHANG, MIAO** ; **WANG, XIANGXIANG** ; **MA, XIAOQIANG** ; **LIU, JIANG-CHUAN**. Deep learning for edge computing applications: A state-of-the-art survey. *IEEE Access*, 2020, vol. 8, 58322-58336
- **CHEN, JIASI** ; **RAN, XUKAN**. Deep learning with edge computing: A review. *Proceedings of the IEEE*, 2019, vol. 107 (8), 1655-1674
- **DUTTA, LACHIT** ; **BHARALI, SWAPNA**. Tinyml meets IoT: A comprehensive survey. *Internet of Things*, 2021, vol. 16, 100461
- **HAN, SONG** ; **LIU, XINGYU** ; **MAO, HUIZI** ; **PU, JING** ; **PEDRAM, ARDAVAN** ; **HOROWITZ, MARK A** ; **DALLY, WILLIAM J**. e: Efficient inference engine on compressed deep neural network. *ACM SIGARCH Computer Architecture News*, 2016, vol. 44 (3), 243-254
- **MISHRA, RAHUL** ; **GUPTA, HARI**. Transforming large size to lightweight deep neural networks for IoT applications. *ACM Computing Surveys*, 2023, vol. 55 (11), 1-35
- **HAN, SONG** ; **MAO, HUIZI** ; **DALLY, WILLIAM J**. Deep compression: Compressing deep neural networks with pruning, trained quantization and huffman coding. *arXiv preprint arXiv:1510.00149*, 2015
- **LIU, SICONG** ; **LIN, YINGYAN** ; **ZHOU, ZIMU** ; **NAN, KAIMING** ; **LIU, HUI** ; **DU, JUNZHAO**. On-demand deep model compression for mobile devices: A usage-driven model selection framework. *In Proceedings of the 16th annual international conference on mobile systems, applications, and services*, 2018, 389-400
- **MARCO, VICENT SANZ** ; **TAYLOR, BEN** ; **WANG, ZHENG** ; **ELKHATIB, YEHIA**. Optimizing deep learning inference on embedded systems through adaptive model selection.. *ACM Transactions on Embedded Computing Systems (TECS)*, 2020, vol. 19 (1), 1-28
- **BIRMAN, YONI** ; **HINDI, SHAKED** ; **KATZ, GILAD** ; **SHABTAI, ASAF**. Cost-effective ensemble models selection using deep reinforcement learning. *Information Fusion*, 2022, vol. 77, 133-148
- **LIU, LANLAN** ; **DENG, JIA**. ynamic deep neural networks: Optimizing accuracy-efficiency trade-offs by selective execution. *In Proceedings of the AAAI Conference on Artificial Intelligence*, 2018, vol. 32

- **HOU, HUANHUAN** ; **JAWADDI, SITI NURAISHAH AGOS** ; **ISMAIL, AZLAN**. Energy efficient task scheduling based on deep reinforcement learning in cloud environment: A specialized review.. *Future Generation Computer Systems*, 2023

- **ZELEKE, DESALEGN ABEBAW** ; **KIM, HAE-DONG**. A new strategy of satellite autonomy with machine learning for efficient resource utilization of a standard performance CubeSat. *Aerospace*, 2023, vol. 10 (1), 78

- **CHENG, YU** ; **WANG, DUO** ; **ZHOU, PAN** ; **ZHANG, TAO**. Model compression and acceleration for deep neural networks: The principles, progress, and challenges. *IEEE Signal Processing Magazine*, 2018, vol. 35 (1), 126-136

- **HOEFLER, TORSTEN** ; **ALISTARH, DAN** ; **BEN-NUN, TAL** ; **DRYDEN, NIKOLI** ; **PESTE, ALEXAN-DRA**. Sparsity in deep learning: Pruning and growth for efficient inference and training in neural networks. *The Journal of Machine Learning Research*, 2021, vol. 22 (1), 10882-11005

- **YEOM, SEUL-KI** ; **SEEGERER, PHILIPP** ; **LA-PUSCHKIN, SEBASTIAN** ; **BINDER, ALEXANDER** ; **WIEDEMANN, SIMON** ; **M¨ULLER, KLAUS-RO-BERT** ; **SAMEK, WOJCIECH**. Pruning by explaining: A novel criterion for deep neural network pruning. *Pattern Recognition*, 2021, vol. 115, 107899

- **JUNG, SANGIL** ; **SON, CHANGYONG** ; **LEE, SEOHYUNG** ; **SON, JINWOO** ; **HAN, JAE-JOON** ; **KWAK, YOUNGJUN** ; **HWANG, SUNG JU** ; **CHOI, CHANGKYU**. Learning to quantize deep networks by optimizing quantization intervals with task loss. *In Proceedings of the IEEE/CVF Conference on Computer Vision and Pattern Recognition (CVPR)*, June 2019

- **RUSSAKOVSKY, OLGA** ; **DENG, JIA** ; **SU, HAO** ; **KRAUSE, JONATHAN** ; **SATHEESH, SANJEEV** ; **MA, SEAN** ; **HUANG, ZHIHENG** ; **KARPATHY, ANDREJ** ; **KHOSLA, ADITYA** ; **BERNSTEIN, MICHAEL et al.** Imagenet large scale visual recognition challenge.. *International journal of computer vision*, 2015, vol. 115, 211-252

- **KRIZHEVSKY, ALEX** ; **HINTON, GEOFFREY et al.** *Learning multiple layers of features from tiny images*, 2009

- **DING, JIE** ; **TAROKH, VAHID** ; **YANG, YUHONG**. Model selection techniques: An overview. *IEEE Signal Processing Magazine*, 2018, vol. 35 (6), 16-34